Europäisches Patentamt

European Patent Office

Office européen des brevets

(19)

(11) Veröffentlichungsnummer : **0 279 059 B1**

(12)                    EUROPÄISCHE PATENTSCHRIFT

(45) Veröffentlichungstag der Patentschrift :
05.06.91 Patentblatt 91/23

(51) Int. Cl.⁵ : **G11B 17/04**, G11B 15/675

(21) Anmeldenummer : 87118621.9

(22) Anmeldetag : 16.12.87

(54) **Gerät mit einer automatischen Einzugsvorrichtung.**

(30) Priorität : 31.01.87 DE 3702887

(43) Veröffentlichungstag der Anmeldung :
24.08.88 Patentblatt 88/34

(45) Bekanntmachung des Hinweises auf die
Patenterteilung :
05.06.91 Patentblatt 91/23

(84) Benannte Vertragsstaaten :
AT BE CH DE ES FR GB IT LI LU NL SE

(56) Entgegenhaltungen :
WO-A-84/03007
BE-A- 773 819
DE-A- 3 505 339
GB-A- 2 126 003
JP-A- 5 028 623
US-A- 4 434 444

(73) Patentinhaber : **Deutsche Thomson-Brandt
GmbH
Hermann-Schwer-Strasse 3 Postfach 1307
W-7730 Villingen-Schwenningen (DE)**

(72) Erfinder : **Scheffler, Wilfried
Auf Schelmen 23
W-7710 Donaueschingen (DE)**

EP 0 279 059 B1

## Beschreibung

Die Erfindung betrifft ein Gerät gemäß dem Oberbegriff der ersten Ansprüche.

Automatische Einzugsvorrichtungen sind z.B. für den Einzug und die Rückgabe von Aufzeichnungsträgern für Video- und Audiosignale bekannt, wobei der scheibenförmige Träger nach manueller Einführung in eine schlitzartige, waagerechte Öffnung, meist an der Frontseite des Gerätes, erfaßt wird, wobei z.B. ein Blattfederkontakt den Antriebsmotor für den Einzug einschaltet und ein anderer Kontakt nach vollzogenem Einzung abschaltet. Die Rückgabe geschieht nach beendeter Abtastung selbsttätig oder durch Betätigung einer dafür vorgesehenen Taste.

Aus der DE-A1 36 08 662 ist eine kraftbetätigte Vorrichtung zur Unterstützung des Ladens und Entladung eines Plattenspielers bekannt, der einen beweglichen Sensor in Reibradausführung zum Schalten des Einzugsmotors besitzt. Die Verdrahtung dieser Schaltkontakte und die Schaltkontakte selbst verursachen Kosten und sind häufig störanfällig.

Die Mehrzahl der gegenwärtig angebotenen CD-Spieler besitzen eine von einem Motor angetriebene Schublade. Die CD-Platte wird in die herausgefahrene Schublade eingelegt und wird bei Betätigung einer Start- oder OPEN/CLOSE-Taste von der in das Gerät einfahrenden Schublade in die Abspielstellung gebracht. Nach Beendigung des Abspielens wird die CD-Platte mit der Schublade wieder ausgefahren und kann aus derselben entnommen werden. Für den Bewegungsablauf der Schublade sorgen eine Zahnstange und ein Ritzel und gegenenfalls ein Riemen zur Übertragung der Kraft und Drehrichtung des Motors. Die Auslösung der Schubladenbewegung geschieht meist durch Druck gegen die Frontseite der Schublade, indem entweder dort ein Schalter integriert ist, der also ein Bestandteil der sich bewegenden Schublade ist, oder aber indem die Schublade selbst zur Betätigung eines in der Schubladenmechanik ortsfest angeordneten Schalters nach einem sehr kurzen Weg der Schublade dient. Bekannte Beispiele für die genannten Lösungen sind der CD-Spieler von Hitachi DA 800 resp. von Telefunken HS 980.

Diese Ausführungen sind aufwendig, müssen mit sehr flexiblen Kabelverbindungen versehen sein und sind störanfällig.

Aus der US-PS 4 434 444 ist eine Einzugsvorrichtung für eine Kassette bekannt, die mit einem bürstenlosen Elektromotor ausgestattet ist, der einerseits durch Drehen in die eine Richtung automatisch in derselben Drehrichtung zu laufen beginnt und andererseits durch ein elektrisches Signal angehalten werden kann. Diese beiden Eigenschaften des Motors werden ausgenutzt, um eine Kassette automatisch ein- und ausfahren zu können.

Ein derartiger Motor ist aus der JP-A 5 028 623 bekannt. Eine Drehung seines Rotors erzeugt einen Induktionsstrom in den Statorspulen, der das Gleichgewicht in einer Multivibratorschaltung stört. Diese Störung des Gleichgewichts in der Multivibratorschaltung bewirkt, daß der Motor eingeschaltet wird.

Zum Einzug wird eine Kassette in die für sie vorgesehene Öffnung gesteckt und von Hand leicht hinein gedrückt. Wegen der mechanischen Antriebsmittel wird der Motor durch die Druckbewegung von Hand auf die Kassette in der Einzugsrichtung gedreht, worauf er automatisch anläuft und die Kassette einzieht.

Zum Ausfahren der Kassette ist ein Auszugsknopf zu drücken, der in der genannten US-PS als Eject Button bezeichnet ist. Durch Drücken dieses Auszugsknopfes wird der Motor über ein Hebelgestänge in Auszugsrichtung gedreht, so daß er sich automatisch in der Auszugsrichtung zu drehen beginnt, um die Kassette auszufahren, damit sie der Bediener entnehmen kann.

Dieser Einzugsvorrichtung haften jedoch einige Nachteile an. Der erste Nachteil liegt in der verhältnismäßig aufwendigen mechanischen Konstruktion, denn es ist ein Auszugsknopf nötig, der über mechanische Antriebsmittel mit dem Motor verbunden ist, damit durch Drücken des Auszugsknopfes von Hand der Motor in der Auszugsrichtung gedreht wird.

Bedingt durch den hohen mechanischen Aufwand sind als weitere Nachteile hohe Herstellungskosten, eine Vielzahl mechanischer Bauteile, erhöhte Störanfälligkeit, größerer Verschleiß sowie großer Platzbedarf zu nennen. Schließlich stört ein weiterer Nachteil hauptsächlich den Bediener, denn er hat zum Auszug der Kassette den Auszugsknopf zu suchen und zu drücken, während er zum Einziehen der Kassette die Kassette in die vorgesehene Öffnung zu schieben und leicht einzudrücken hat.

Es ist daher Aufgabe der Erfindung, eine möglichst einfache, wenig störanfällige und verschleißarme aber dennoch kostengünstige und bedienerfreundliche Ein- und Auszugsvorrichtung zu schaffen.

Diese Aufgabe wird gemäß der Erfindung durch die im Anspruch 1 aufgeführten Merkmale gelöst.

Weiterbildungen sind den Unteransprüchen und der Beschreibung eines Ausführungsbeispiels zu entnehmen.

Nach der Erfindung ist eine Einzugsvorrichtung vorgesehen, die den Antriebsmotor selbst als Impulsgeber verwendet. Die Einleitung des Bewegungsvorgangs der Schublade wird durch einen kurzen Druck auf die Schubladenfront ausgelöst, indem durch einen so verursachten kleinen Weg der Schublade über die Antriebsanordnung für dieselbe, nämlich Zahnstange, Ritzel, Riemen und Motor der Rotor des Motors eine Drehbewegung ausführt und dadurch eine kurzzeitige EMK erzeugt. Dieser Spannungsimpuls wird über eine Erkennungs- und Impulsformungsstufe an eine Kontrolleinheit, beispielsweise einen Mikrocomputer, geliefert. Letztere erkennt diesen Spannungsimpuls als Startsignal und schaltet die Motorspannung ein.

Vorteilhafterweise läßt sich die angegebene Lösung ohne teuere zusätzliche Bauteile realisieren, wenn im Fall der Schublade konstruktiv dafür Sorge getragen wird, daß bei Druck auf die Schubladenfront diese einen kleinen Weg gegen eine Federkraft aus ihrer Raststellung ausführen kann und sie auf grund der Federkraft wieder in ihre Raststellung zurückkehrt.

Einzelheiten der Erfindung werden nachfolgend als Ausführungsbeispiel an hand der Zeichnung beschrieben. Letztere zeigt in

Figur 1 eine stark vereinfachte Draufsicht auf eine aus dem Gerätegehäuse ausgefahrene Schublade und ihren Antrieb ;

Figur 2 eine stark vereinfachte Draufsicht auf eine in das Gerätegehäuse eingefahrene Schublade und ihren Antrieb ;

Figur 3 eine einfache Auswerteschaltung für die erzeugte EMK ;

Figur 4 ein Blockschaltbild mit Motor, Auswerteschaltung und Kontrolleinheit.

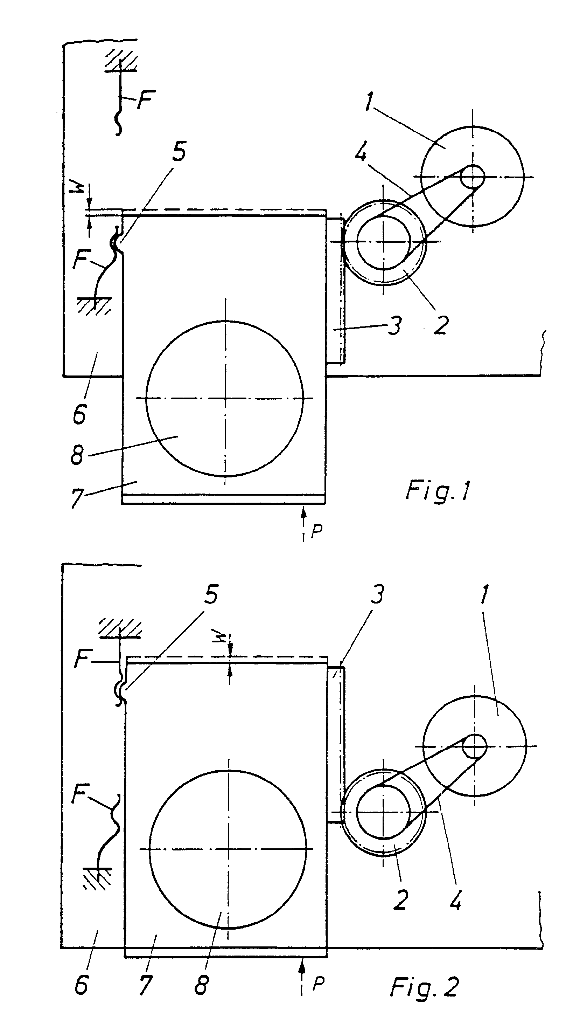

Die Figuren 1 und 2 zeigen im Prinzip eine aus dem Gerätegehäuse 6 eines CD-Spielers herausgefahrene Schublade 7 zur Aufnahme einer CD-Platte 8 bzw. eine in das Gerätegehäuse 6 eingefahrene Schublade 7 mit den Antriebsmitteln für diese Bewegungen bestehend aus einem Motor 1, einem Riemen 4, einem Ritzel 2 und einer Zahnstange 3. In beiden Positionen der Schublade 7 ist konstruktiv dafür gesorgt, daß bei leichtem Druck gegen die Schubladenfront mit der Kraft P die Schublade auch in der eingefahrenen Raststellung, Eingriff der Feder F an der Nase 5, die Schublade den kleinen Weg W, das können z.B. 2 bis 3 mm sein, zurücklegt und dabei über die genannten Antriebsmittel den Rotor des Motors 1 bewegt. Dadurch wird eine EMK erzeugt, die von einer angeschlossenen elektronischen Schaltung als Schaltsignal erkannt und an eine Kontrolleinheit weitergeleitet wird. Als Folge davon wird die Antriebsspannung von der Kontrolleinheit, die beispielsweise ein Microcomputer sein kann, für eine bestimmte Dauer und mit einer bestimmten Polung eingeschaltet. Der richtige Drehsinn des Motors 1 kann wie in herkömmlicher Weise aus der zeitlichen Folge der Befehle "Einfahren" – "Herausfahren" ermittelt werden.

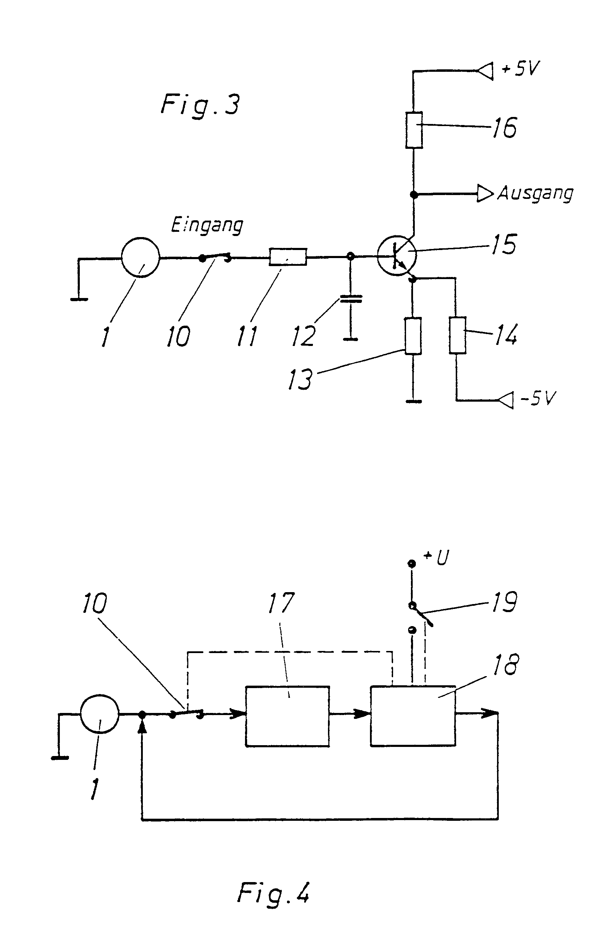

Figur 3 zeigt als Auswerteschaltung eine einfache Schaltung mit dem Transistor 15, der mit seinem Kollektor über den Widerstand 16 an +5V-Anschluß und mit seinem Emitter über den Widerstand 14 am –5V-Anschluß angeschlossen ist. Der Widerstand 13 sorgt für eine negative Vorspannung. Er kann entfallen, wenn die EMK genügend groß ist. An der Basis ist ein Kondensator 12 nach Masse zur Entprellung des Ausgangssignals vorgesehen. über einen normalerweise geschlossenen Schalter 10 und den Widerstand 11 wird die vom Motor 1 kommende EMK der Basis zugeführt und von der Auswerteschaltung auf einen üblichen TTL-Pegel (5V) angehoben und am Kollektor-Ausgang abgegeben.

Das Blockschaltbild der Figur 4 zeigt den Motor 1, den Schalter 10, die Auswerteschaltung 17, den Microcomputer 18 und die für die Funktion erforderlichen Verbindungen. Der Schalter 10 wird nur dann vom Microcomputer 18 geöffnet, wenn er von der Auswerteschaltung 17 einen Schaltimpuls erhalten hat und die Motorspannung einschaltet bis er einen Endschalter 19 öffnet, der an seinem ( + )-Eingang liegt, und damit die Spannung für den Motor 1 wieder unterbricht, sobald die gewünschte Schubladenbewegung ausgeführt ist.

Sobald bei eingefahrener Schublade (Fig. 2) der kurzzeitige Druck auf die Schubladenfront beendet ist, also P = 0 ist, geht die Schublade 7 wieder in die Raststellung. Erst dann erfolgt die hier nicht gezeigte vertikale Bewegung der CD-Platte in die Transportposition, um mit der Schublade herausgefahren zu werden.

Im Gegensatz zu der eingangs erwähnten Einzugsvorrichtung aus der US-PS 4 434 444 benötigt die Erfindung keinen Auszugsknopf mit Gestänge und anderen mechanischen Verbindungen, um den Motor in die Auszugsrichtung zu drehen. Die Abmessungen der erfindungsgemäßen Ein- und Auszugsvorrichtung fallen deshalb kleiner aus. Zum Ausfahren der Kassette braucht der Bediener nicht erst den Auszugsknopf zu suchen und zu drücken, der beim Stand der Technik an nicht leicht zugänglicher Stelle unter der für die Kassette vorgesehenen Öffnung angeordnet ist ; vielmehr genügt es, wenn der Bediener auf die eingelegte Kassette oder die Schubladenfront drückt.

Zusammengefaßt sind an Nachteilen des Standes der Technik geringe Bedienerfreundlichkeit, erhöhte Störanfälligkeit, größerer Verschleiß, eine Vielzahl mechanischer Bauteile, großer Platzbedarf und verhältnismäßig hohe Herstellungskosten zu nennen, während sich die Erfindung gerade durch angenehme Bedienung, geringe Störanfälligkeit, wenig Verschleiß, eine geringe Anzahl mechanischer Bauteile, geringen Platzbedarf und niedrige Herstellungskosten auszeichnet.

## Ansprüche

1. Gerät mit einer automatischen Einzugsvorrichtung, deren Antrieb über eine starr gekoppelte Wirkverbindung (2, 3, 4) durch einen Elektromotor (1) erfolgt, indem durch manuelles Einschieben eines Gegenstandes (7, 8), der gegebenenfalls in einer Umhüllung steckt, wie etwa einer Kassette, in eine Einzugsöffnung über die bestehende Wirkverbindung eine Rotordrehung des Motors verursacht wird, wodurch eine EMK entsteht, die als Einschaltbefehl für den Motor ausgewertet wird, **dadurch gekennzeichnet,** daß eine Kontrolleinheit (17, 18) vorgesehen ist, die sich die Richtung der zuletzt durchgeführten Bewegung der Einzugsvorrichtung dadurch merkt, daß sie ein dieselbe kennzeichnendes Signal abspeichert, und daß so sichergestellt wird, daß der Drehsinn des Motors jeweils für eine nachfolgende ebenfalls durch manuelle Betätigung des Gegenstandes initüerbave Bewegung der Einzugsvorrichtung in einer der zuletzt durchgeführten Bewegung entgegengesetzten Richtung richtig ist.

2. Gerät nach Anspruch 1, **dadurch gekennzeichnet,** daß eine Schublade zum Transport desGegenstandes vorgesehen ist, die über Ritzel (2) und Zahnstange (3) und gegebenenfalls mittels eines Riemens (4) von einem Elektromotor (1) antreibbar ist, um mit dem Gegenstand in dafür geeignete Raststellungen ein- oder auszufahren, daß die beiden Raststellungen durch federnde Bauelemente (F) derart ausgebildet sind, daß durch Einwirkung einer Kraft (P) gegen die Stirnseite der Schublade (7) diese einen geringen Weg (W) zurücklegt, wodurch der Rotor des Motors (1).über die Antriebselemente eine Drehbewegung ausführt, die eine EMK und damit einen Impuls erzeugt, der von einer Kontrolleinheit als Startsignal erkannt wird und die Motorspannung für die gewünschte Schubladenbewegung einschaltet.

3. Gerät nach Anspruch 1, **dadurch gekennzeichnet,** daß dem Eingang der Konstrolleinheit eine Auswerteschaltung (17) vorgeschaltet ist, die eindeutige Start-Signale erkennt.

4. Gerät nach Anspruch 1, **dadurch gekennzeichnet,** daß die Kontrolleinheit einen Microcomputer (18) aufweist oder Teil eines solchen ist.

**Claims**

1. A device with an automatic intake mechanism which is driven by an electric motor (1) by way of a positively coupled operative connection (2, 3, 4), and in which when an object (7, 8) which may be in an enclosure, such as a cassette, is slid by hand into an intake opening this causes rotation of the rotor of the motor, by way of the operative connection which exists, whereby an electromotive force is produced which is used as a command for switching the motor on, characterised in that a control unit (17, 18) is provided which notices the direction of the last movement of the intake mechanism that has been made by storing a signal characterising this movement, and that this ensures that the direction of rotation of the motor is always correct for a subsequent movement of the intake apparatus, which likewise can be initiated by manual actuation of the object, in a direction opposite to that of the last movement made.

2. A device according to Claim 1, characterised in that a drawer is provided, for transportation of the object, which is adapted to be driven by an electric motor (1) by way of a pinion (2) and rack (3) and if necessary by means of a belt (4) in order to move, together with the object, into or out of rest positions suitable for this, and that the two rest positions are so formed, by resilient structural elements (F), that by the action of a force (P) against the front side of the drawer (7), the drawer travels a short distance (W), whereby the rotor of the motor (1) is caused to make a rotary movement, through the action of the driving elements, and this movement produces an electromotive force and therefore a pulse which is recognised as a starting signal by a control unit and switches on the motor voltage for the required drawer movement.

3. A device according to Claim 1, characterised in that an evaluation circuit (17) interposed before the input of the control unit recognises clear starting signals.

4. A device according to Claim 1, characterised in that the control unit is a microcomputer (18) or part of a microcomputer.

**Revendications**

1. Appareil comportant un dispositif de chargement automatique qui est entraîne par un moteur électrique (1) au moyen d'une liaison active (2, 3, 4) accouplée rigidement par le fait que l'introduction manuelle d'un objet (7, 8) qui, le cas échéant, se trouve dans une enveloppe telle qu'une cassette, dans une ouverture de chargement provoque une rotation du rotor du moteur par la liaison active existante, ce qui génère une force électromotrice qui est identifiée comme ordre de commutation pour le moteur, caractérisé en ce qu'il est prévu une unité de contrôle (17, 18) qui retient le sens de déplacement, effectué en dernier lieu par le dispositif d'introduction par le fait qu'elle met en mémoire un signal caractérisant celui-ci, et qu'il est ainsi assuré que le sens de rotation du moteur pour chaque mouvement successif du dispositif d'introduction également induit par la commande manuelle de l'objet dans une direction opposée au mouvement effectué en dernier lieu est correct.

2. Appareil selon la revendication 1, caractérisé en ce qu'un tiroir est prévu pour le transport de l'objet qu'un moteur électrique peut entraîner par un pignon (2) et une crémaillère (3) et, le cas échéant, une courroie (4), afin de l'introduire et de le sortir ensemble avec l'objet dans des positions de crantage appropriées à cet effet, que les deux positions de crantage sont constituées par des éléments élastiques (F) de manière que par l'action d'une force (P) exercée sur la face frontale du tiroir (7), celui-ci effectue une petite course (W), de sorte que le rotor du moteur (1) effectue un mouvement de rotation par les organes d'entraînement, qui induit une force électromotrice et par conséquent, une impulsion qu'une unité de contrôle identifie comme signal de démarrage et qui connecte la tension du moteur pour le mouvement de tiroir voulu.

3. Apareil selon la revendication 1, caracterisé en ce qu'un circuit de traitement (17) qui identifie sans équivoque des signaux de démarrage, est monté en série en amont de l'entrée de l'unité de contrôle.

4. Appareil selon la revendication 1, caractérisé en ce que l'unité de contrôle comporte un microprocesseur (18) ou une partie de celui-ci.

Fig.1

Fig. 2

## Fig.3

Eingang

Ausgang

+5V

−5V

1  10  11  12  13  14  15  16

## Fig.4

+U

10  17  18  19

1